# FASCICULE DE BREVET EUROPEEN

(11) **EP 3 653 337 B1**
(45) Date de publication et mention de la délivrance du brevet: **19.08.2026**
(21) Numéro de dépôt: 19208105.7
(22) Date de dépôt: 08.11.2019
(51) Int. Cl.: B24C 1/00, B24C 1/10, B24C 3/32

(54) **PROCÉDÉ DE COMPACTAGE D'UNE PEINTURE ANTI-CORROSION D'UNE PIÈCE DE TURBOMACHINE**
VERFAHREN ZUM VERDICHTEN EINEN KORROSIONSSCHUTZLACK EINES TEILS EINES TURBOTRIEBWERKS
METHOD FOR COMPACTING ANTI-CORROSION PAINT OF A PART OF A TURBINE ENGINE

(30) Priorité: 16.11.2018 FR 1860569
(43) Date de publication de la demande: 20.05.2020
(73) Titulaire: SAFRAN AIRCRAFT ENGINES, 75015 Paris (FR)
(72) Inventeur: GANI, Léa, Rébecca, 77550 Moissy-Cramayel (FR)
(74) Mandataire: Gevers & Orès

(56) Documents cités:
- EP-A1- 1 598 444
- WO-A1-2015/074765
- DE-A1- 102016 006 939
- US-A1- 2013 341 427

## Description

### 1. Domaine de l'invention

La présente invention concerne le domaine des traitements de surface de pièces mécaniques contre la corrosion. Elle vise en particulier, un procédé de compactage d'une peinture anti-corrosion recouvrant une pièce, en particulier une pièce de turbomachine.

### 2. Etat de la technique

Les pièces mécaniques, notamment celles employées dans les turbomachines d'aéronefs, sont exposées à des environnements contraignants en termes de températures, d'éléments corrosifs, et de réactions d'oxydations. Les pièces, telles que les arbres de compresseur et de turbine basse pression, sont par exemple réalisées dans un acier ou un alliage d'acier à teneur de cobalt réduite de manière à présenter une résistance mécanique élevée. Ces aciers présentent une forte sensibilité aux phénomènes de corrosion qui se manifestent principalement par le développement de piqûres de corrosion qui consistent en des attaques localisées et profondes. Ces pièces sont également soumises à de fortes sollicitations mécaniques lors du fonctionnement de la turbomachine qui peuvent conduire à un développement de la corrosion. L'effet synergique contrainte/corrosion conduit à un accroissement notable des phénomènes de corrosion.

Certaines pièces ont été recouvertes par une peinture résistante aux températures élevées et aux différents éléments corrosifs et oxydatifs (kérosène, huile, etc) pour que celles-ci résistent à l'environnement dans lequel elles évoluent, et notamment les protéger de la corrosion. Cette peinture étant composée en parte de trioxyde de chrome, a été classée comme CMR qui est l'acronyme de Cancérigène, Mutagène, Reprotoxique, et est frappée par le règlement REACH sur l'enregistrement, l'évaluation, l'autorisation et les restrictions des substances chimiques.

Afin de s'affranchir des contraintes liées à cette réglementation, une solution consistant à rendre la peinture anodique a été développée. Des exemples de cette solution sont décrites dans les documents FR-A1-2991216 et FR-A1-3040013. En particulier, cette solution consiste à projeter sur la surface de la pièce une peinture liquide ayant un liant minéral et chargée de particules métalliques, telles que de l'aluminium. Cette peinture est projetée via un pistolet manipulé par un opérateur. La pièce revêtue de peinture est chauffée dans un four pour polymériser la peinture projetée. La peinture polymérisée subit ensuite une action mécanique tel qu'un compactage afin de mettre en contact les particules métalliques sans dégrader l'aspect cosmétique et physique de la peinture. Cette action permet de réaliser une continuité électrique des particules métalliques avec les parties métalliques à traiter. La couche de peinture est ainsi rendue dense et conductrice électriquement pour en faire une couche sacrificielle qui se corrodera préférentiellement, en lieu et place du métal de la pièce à protéger. On parle alors d'une peinture anodique pour désigner la couche sacrificielle rendue conductrice.

Le compactage consiste à sabler ou grenailler les parties peintes après polymérisation avec des particules de corindon blanc, de billes de verre, ou encore de particules de plastique. Le compactage permet de densifier la peinture et lui conférer des propriétés sacrificielles responsables de ses propriétés anticorrosion performantes. Alternativement, il est également connu de réaliser la peinture anodique par lustrage. Le lustrage est un ponçage manuel de la pièce au papier de verre qui est long à mettre en œuvre.

L'étape consistant à rendre la peinture anodique est facultative lorsque la peinture contient du trioxyde de chrome. Elle est cependant indispensable pour les peintures qui n'en contiennent pas.

Toutefois, les particules utilisées pour le compactage peuvent s'incruster dans la peinture et à la surface de celle-ci. En fonctionnement, un relargage ou libération de ces particules peut intervenir ce qui peut endommager d'autres organes de la turbomachine qui sont sur la trajectoire de ces particules. Certaines particules comme le corindon, qui est un élément minéral, présente une dureté élevée de l'ordre de 9,5 sur l'échelle de MOHS. Pour les pièces, comme les arbres de turbine et les arbres de compresseur, l'étape de compactage n'est donc pas réalisée pour éviter la libération de ces particules très dures à une vitesse élevée ce qui entraîne une diminution des propriétés anticorrosion de celle-ci. En effet, la couche de peinture n'étant pas conductrice sans le compactage, elle assure un rôle de protection anticorrosion plus faible, uniquement en formant une barrière à la surface de la pièce. L'effet anticorrosion apporté par cette couche formant barrière dépend fortement de son taux de porosités. De plus, dès que la pièce est éraflée ou rayée, la protection cesse et la pièce devient sensible à la corrosion. A cela s'ajoute le fait que pour ces pièces dont le revêtement n'est pas compacté, la peinture est appliquée manuellement en au moins deux couches pour limiter au maximum les porosités de celle-ci. Cela rallonge la durée de fabrication de la pièce sans compter les différentes étapes nécessaires à la préparation de la pièce avant, pendant et après l'application de la peinture. La maitrise des épaisseurs des différentes couches de peinture est délicate et en particulier sur des pièces présentant une configuration complexe.

EP1598444A1 divulgue un procédé de compactage d'une peinture anti-corrosion selon le préambule de la caractéristique de la revendication 1.

### 3. Objectif de l'invention

La présente invention a notamment pour objectif de fournir une solution simple et efficace permettant d'assurer une densification d'une peinture anti-corrosion pour accroître la protection à la corrosion sans incrustation de particules dures et tout en évitant la dégradation de la peinture anti-corrosion.

### 4. Exposé de l'invention

On parvient à cet objectif conformément à l'invention grâce à un procédé de compactage d'une peinture anti-corrosion comportant des particules métalliques et recouvrant une pièce mécanique telle qu'une pièce de turbomachine, le procédé comprenant les caractéristiques de la revendication 1 comprenant une étape d'au moins une projection de particules solides de glace sur la pièce de manière à densifier et à rendre électriquement conductrice la peinture.

Ainsi, cette solution permet d'atteindre l'objectif susmentionné. En particulier, de telles particules solides de glace permettent de densifier la peinture qui recouvre la pièce mécanique afin de mettre en contact les particules métalliques se trouvant dans la peinture ce qui augmente sa résistance à la corrosion. Les particules solides de glace permettent également d'une part, d'éliminer les problèmes d'incrustation et de relargage, en fonctionnement, de particules étrangères telles que les billes de verre ou les particules de corindon puisque celles-ci vont disparaître en se sublimant suite à leur impact sur la peinture. De la sorte, l'intégrité physique de la peinture est préservée. Enfin, ce procédé est facilement automatisable de sorte qu'il permette de réduire les opérations manuelles consistant entre autres à appliquer différentes couches de peinture pour palier l'incrustation de particules étrangères et par conséquent un gain en matière de délai de fabrication et de coût.

De préférence, le procédé comprend également l'une ou plusieurs des caractéristiques ou étapes suivantes, prises seules ou en combinaison :
- lesdites particules solides comprennent des particules de dioxyde de carbone,
- lesdites particules solides sont sublimées après impact sur la peinture,
- les particules solides sont projetées à une pression comprise entre 2 et 8 bars,
- la distance entre la surface de la pièce et la buse est comprise entre 20 et 100 mm,
- les particules solides sont projetées suivant au moins un faisceau dont la direction générale présente une inclinaison par rapport à la surface de la pièce qui est comprise entre 30° et 90°,
- les particules solides sont projetées suivant au moins un faisceau qui se déplace à une vitesse comprise entre 40 et 60 mm/s,
- le procédé comprend deux étapes de projection des particules sur la surface de la pièce,
- la pièce est un arbre de turbomachine,
- lesdites particules solides peuvent être projetées par des dispositifs de sablage ou de grenaillage,
- la projection des particules solides est mise en œuvre dans une enceinte fermée, préférentiellement à température ambiante,
- la dureté des particules solide de glace est comprise entre 2 et 2,5 MOHS,
- la température de sublimation des particules solides de glace après impact est de l'ordre de -78,9°C,
- les particules métalliques comprennent de l'aluminium.

De préférence, l'invention concerne un procédé de réalisation d'un revêtement anodique, le procédé comprenant les étapes suivantes :
- projection d'une peinture liquide chargée de particules métalliques sur une surface de la pièce,
- polymérisation de la peinture projetée sur la pièce de manière à obtenir une couche de peinture anti-corrosion destinée à protéger la pièce,
- compactage de la peinture anti-corrosion de manière à obtenir une peinture anodique, le compactage comprenant au moins une projection de particules solides de glace en direction de ladite peinture anti-corrosion de manière à densifier la peinture anticorrosion et à la rendre électriquement conductrice.

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 est une vue schématique de face d'un exemple de dispositif de compactage d'une pièce pour un procédé selon l'invention ;
La figure 2 est une vue schématique, de dessus, du dispositif de compactage de la figure 1;
La figure 3 représente une image d'une éprouvette revêtue d'une peinture non compactée après vieillissement;
La figure 4 représente une image d'une éprouvette revêtue d'une peinture compactée avec des particules solides de glace sèche selon l'invention ;
La figure 5 illustre une image prise au MEB d'une peinture n'ayant pas subi de compactage ; et
La figure 6 illustre une image prise au MEB d'une peinture ayant subi un compactage avec des particules de glace selon l'invention.

### 6. Description de modes de réalisation de l'invention

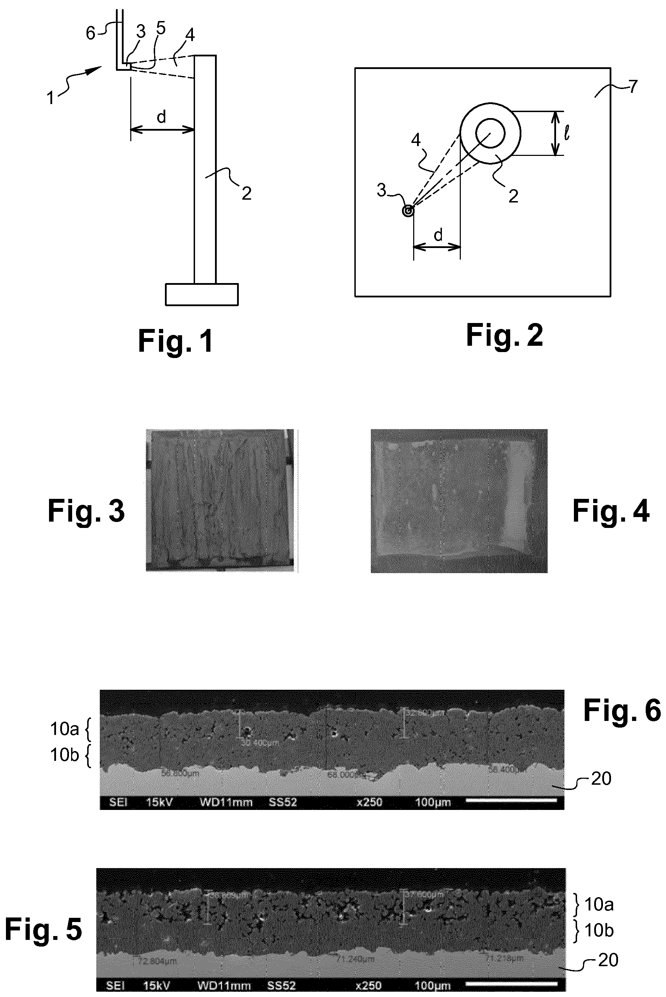

Les figures 1 et 2 représentent respectivement en vue de face et en vue de dessus un dispositif de compactage 1 d'une peinture anti-corrosion qui revêt la surface d'une pièce mécanique 2, et en particulier d'une pièce mécanique de turbomachine d'aéronef. Nous entendons par pièce mécanique des pièces destinées à assurer, en service, une fonction mécanique, ce qui implique que ces pièces aient une bonne tenue mécanique ainsi qu'une bonne résistance à la corrosion et à l'usure. Des arbres de turbomachine, et notamment des arbres de compresseurs et/ou de turbine sont ainsi des exemples de pièces mécaniques non exhaustives concernées par l'invention.

Nous rappelons que, préalablement au procédé de compactage, la pièce 2 est recouverte d'une peinture anti-corrosion. La peinture est une peinture inorganique ou toute peinture comprenant des particules métalliques. En particulier, une peinture liquide chargée de particules métalliques est pulvérisée sur la surface de la pièce. Avantageusement, les particules métalliques sont des particules d'aluminium. Des exemples de peintures anti-corrosion appliquées sur la surface des pièces sont celles connues sous la marque Sermetel W^{®} ou Maberbind CF^{®}.

Après projection de la peinture, la pièce revêtue est polymérisée de manière que la peinture durcisse et forme la peinture anti-corrosion destinée à protéger la pièce.

La peinture anti-corosion est ensuite compactée. Pour cela, le compactage est réalisé par le dispositif de compactage 1. Nous entendons par le terme compactage, dans la présente invention, le fait de projeter des matériaux, éventuellement abrasifs, à haute vitesse sur la surface de la pièce revêtue pour rendre la peinture conductrice. De la sorte, la peinture anti-corrosion est densifiée ce qui met en contact les particules métalliques de la peinture et augmente la tenue à la corrosion de celle-ci. La peinture est rendue électriquement conductrice. Nous obtenons alors un revêtement anodique.

Le dispositif de compactage 1 comprend au moins une buse 3 qui est destinée à projeter un faisceau ou un jet 4 de particules solides permettant un traitement de surface de la pièce de turbomachine. Dans le présent exemple, le dispositif 1 comprend une seule buse 3 avec un orifice de sortie 5 placé à distance de la pièce 2. La buse 3 est reliée à une conduite 6 qui est alimentée en particules solides. Les particules solides sont conservées dans un réservoir (non représenté). En particulier, l'orifice de sortie 5 de la buse est placé à une distance d de la surface de la pièce qui est comprise entre 20 et 100 mm. Avantageusement, mais non limitativement, la distance d prédéterminée est comprise entre 30 et 60 mm. Préférentiellement, la distance est de 50 mm. La buse 3 présente une direction générale qui est inclinée par rapport à la surface de la pièce de manière à éviter une usure prématurée des particules solides. Cette inclinaison est comprise entre 30° et 85°. La limite minimale de 30° permet d'éviter le décapage de la peinture. Préférentiellement, l'inclinaison de la buse par rapport à la pièce est comprise entre 45° et 90°. Il est prévu de réaliser entre un et deux passages du faisceau de particules solides à la surface de la pièce afin de conserver l'intégrité physique et cosmétique de la peinture.

Pour effectuer une projection des particules, la buse 3 est déplacée le long de la pièce, suivant sa hauteur, et sur sa circonférence en conservant à tout instant la même géométrie pour la position relative de la buse et de la surface de la pièce.

Bien entendu, l'invention n'est pas limitée à l'utilisation de ce dispositif de compactage qui n'est décrite qu'à titre d'exemple. Le dispositif de compactage pourrait par exemple comprendre deux buses qui envoient, chacune, un jet ou faisceau de particules 3 orienté chacun entre 30 et 90° par rapport à la surface de la pièce 1, les deux faisceaux se propageant dans un même plan. Les directions générales des deux buses sont orientées à 90° l'une de l'autre. Les deux faisceaux se rejoignent en un point de focalisation 4 qui est situé sur la pièce 1, c'est-à-dire qu'ils atteignent tous deux le même point à traiter. Compte tenu de l'angle solide caractérisant la divergence des faisceaux 3, la surface balayée à chaque instant par le sablage a la forme d'un cercle de diamètre "I".

Le dispositif de compactage 1 ici est un système de nettoyage cryogénique haute pression.

Le dispositif de compactage 1 est avantageusement installée dans une enceinte 7 prévue à cet effet. L'enceinte 7 est fermée au moyen d'une porte par laquelle la pièce est introduite. A l'intérieur de l'enceinte règne avantageusement une température ambiante et une hygrométrie contrôlée afin d'éviter la condensation de l'eau sur la pièce. Bien entendu, il n'est pas nécessaire que l'enceinte soit fermée.

Les particules solides utilisées pour réaliser le compactage de la peinture anticorrosion qui recouvre ici la pièce de turbomachine sont des particules de glace sèche. Ces particules solides de glace sèche sont composées avantageusement, mais non limitativement de dioxyde de carbone (CO₂) sous forme solide. Le dioxyde de carbone solide est également connu sous la dénomination de glace carbonique.

Les particules solides de glace sont projetées en direction de la surface de la pièce (qui est revêtue de la peinture) avec une énergie suffisante pour densifier la peinture la recouvrant. Une fois que les particules solides ont impacté la peinture anticorrosion, celles-ci se subliment. Ceci est permis grâce à la température ambiante de l'enceinte 7. Le dioxyde de carbone solide se transforme en gaz ce qui permet de ne pas laisser de particules incrustées dans la peinture anti-corrosion. La température de sublimation des particules de glace après impact est comprise entre 75°C et 80°C. Avantageusement, mais non limitativement la température de sublimation est de l'ordre de -78,9°C.

Avantageusement, mais non limitativement, une étape de séchage peut être mise en œuvre après le compactage de manière à contrôler la condensation susceptible de se former après la sublimation des particules solides de glace sèche. Cela peut avoir lieu avant l'ouverture de l'enceinte.

Selon l'invention, les particules solides présentent des dimensions comprises entre 1 mm et 30 mm. Avantageusement, mais non limitativement, les dimensions de ces particules sont comprises entre 1 et 10 mm. Préférentiellement, les dimensions des particules solides sont de l'ordre de 3 mm. Les particules peuvent présenter une forme sphérique.

Les particules solides de glace sont délivrées à une pression comprise entre 2 et 8 bars et préférentiellement entre 5 et 8 bars. Préférentiellement encore, la pression à laquelle les particules sont délivrées est comprise entre 6 et 8 bars. Ceci permet de densifier la peinture sans l'endommager. Il n'y a pas de décapage de la peinture avec une telle plage de fonctionnement. De même afin de conserver l'intégrité physique et cosmétique de la peinture, les particules de glace sont projetées avec un débit massique compris 0,8 kg/h et 2 kg/h. Préférentiellement, le débit massique est compris entre 1 et 1.5 kg/h.

Le faisceau de particules se déplace à la surface de la pièce à une vitesse comprise entre 40 mm/s et 60 mm/s. Préférentiellement, la vitesse de déplacement de la buse est de 50 mm/s.

La projection des particules de glace à une pression constante est facilitée grâce à un flux d'air projeté en même temps que les particules dans la buse de sorte à faciliter la projection des particules. La buse 3 se déplace à la vitesse comprise entre 40 mm/s et 60 mm/s pour déplacer le faisceau de particules de glace.

Alternativement, une machine de grenaillage à succion, avec une pression d'air et un débit massique du flux projeté adapté peut être envisagé pour projeter les particules solides de glace. Cette machine est par exemple équipée d'une ou deux buses rondes de 10 à 14 mm.

Des essais de brouillard salin (selon la norme ISO 9227) pour évaluer la tenue à la résistance à la corrosion de la peinture ainsi compactée, ont permis de démontrer que celle-ci assure son rôle anticorrosion du substrat après 168 heures de vieillissement. Les particules de glace ont également pour avantage de se sublimer après avoir été en contact avec la peinture ce qui ne laisse aucune trace d'éléments incrustés contrairement aux particules utilisées dans l'art antérieur.

Les figures 3 et 4 présentent une comparaison après 168 heures de vieillissement entre une éprouvette (représentant la pièce mécanique) revêtue d'une seule couche de peinture non compactée et une éprouvette revêtue d'une seule couche de peinture avec compactage à la glace sèche. Selon l'invention, la couche de peinture est de l'ordre de 50 µm. Nous voyons sur la figure 3 que de la rouille épaisse et dense s'est développée à plusieurs endroits de surface de l'éprouvette. A l'inverse, l'éprouvette dont la peinture est compactée avec les particules de glace sèche de la figure 4 ne présente pas de traces de rouilles développées sur la surface de la pièce. Cela démontre bien que les particules de glace permettent de densifier la couche de peinture et de pouvoir améliorer la tenue de celle-ci à la corrosion.

Les figures 5 et 6 sont des images capturées d'un MEB (qui est l'acronyme de microscope électronique à balayage) et permettent d'observer la densification de la peinture appliquée en deux couches sur une éprouvette 20 respectivement avec et sans compactage. Selon l'invention, chaque couche présente une épaisseur comprise entre 50 µm +/- 10%. Sur la figure 5 qui représente une peinture non compactée, nous constatons que la peinture présente de nombreuses porosités entre la surface de l'éprouvette 20 et la surface externe de la peinture. La deuxième couche de peinture (couche supérieure) 10a qui est située à environ 37 µm de la surface externe de la pièce contient davantage de porosités, voire est quasiment remplie de porosités que la première couche de peinture (couche inférieure) 10b en contact avec la surface de l'éprouvette 20.

En ce qui concerne la peinture compactée avec les particules de glace représentée sur la figure 6, nous pouvons voir que la taille et la quantité de porosités ont nettement diminué dans la deuxième couche 10b. Nous remarquons également qu'il n'y a aucune incrustation de particules étrangères. L'opération de compactage par les particules de glace n'a pas dégradé, ni décapé la peinture puisque l'épaisseur mesurée de peinture a seulement diminué de 5 à 10 µm (maximum autorisé de 10 µm) selon l'invention. Il en résulte que le compactage avec des particules solides de glace sèche élimine les risques de relargage ou de libération de particules ayant servi au compactage puisque les particules de glace sèche sont sublimées ici au contact après impact sur la pièce.

Dans un exemple de réalisation avec une couche de peinture présentant une épaisseur de l'ordre de 50 µm, les particules de glace sèche ont été projetées suivant une inclinaison par rapport à la surface de la pièce de l'ordre de 90°. Les particules ont été projetées au maximum deux fois sur la surface de la pièce. Avec un essai de brouillard salin après 168 heures de vieillissement, l'éprouvette ne présente aucune coulure de corrosion rouge ni aucune attaque de corrosion localisée (piqûre de corrosion).

## Revendications

1. Procédé de compactage d'une peinture anti-corrosion (10a, 10b) comportant des particules métalliques et recouvrant une pièce mécanique (2, 20) telle qu'une pièce de turbomachine, le procédé comprenant une étape de projection d'au moins une couche de peinture chargée de particules métalliques sur la surface de la pièce et au moins une étape de projection de particules solides de glace sur la pièce (2, 20) de manière à densifier et à rendre électriquement conductrice la couche de peinture tout en préservant l'intégrité physique de la peinture anti-corrosion, le procédé étant **caractérisé en ce que** la couche de peinture présente une épaisseur comprise entre 50 µm +/- 10%, les particules solides présentent des dimensions comprises entre 1 et 30 mm, et préférentiellement de 3 mm, et **en ce que** la projection des particules solides de glace réduit l'épaisseur de la couche de peinture de 5 à 10 µm.

2. Procédé selon la revendication précédente, **caractérisé en ce que** lesdites particules solides comprennent des particules de dioxyde de carbone.

3. Procédé selon l'une des revendications précédentes, **caractérisé en ce que** les particules solides sont projetées à une pression comprise entre 2 et 8 bars.

4. Procédé selon l'une quelconque des revendications précédentes, **caractérisé en ce que** les particules solides sont projetées suivant au moins un faisceau (4) dont la direction générale présente une inclinaison par rapport à la surface de la pièce qui est comprise entre 30° et 90°.

5. Procédé selon l'une quelconque des revendications précédentes, **caractérisé en ce que** la distance entre la surface de la pièce (2, 20) et la buse (3) est comprise entre 20 et 100 mm.

6. Procédé selon l'une quelconque des revendications précédentes, **caractérisé en ce que** les particules solides sont projetées suivant au moins un faisceau (4) qui se déplace à une vitesse comprise entre 40 et 60 mm/s.

7. Procédé selon l'une quelconque des revendications précédentes, **caractérisé en ce qu'**il comprend deux étapes de projection des particules sur la surface de la pièce (2, 20).

8. Procédé selon l'une quelconque des revendications précédentes, **caractérisé en ce que** les particules métalliques comprennent de l'aluminium.

9. Procédé selon l'une quelconque des revendications précédentes, dans lequel la pièce mécanique est un arbre de turbomachine.

10. Procédé selon l'une quelconque des revendications précédentes, **caractérisé en ce que** les particules solides de glace sont projetées avec un débit massique compris entre 0,8 kg/h et 2 kg/h, préférentiellement entre 1 et 1.5 kg/h.

11. Procédé selon l'une quelconque des revendications précédentes, **caractérisé en ce que** les particules de glaces sont projetées en même temps qu'un flux d'air et à une pression constante.

12. Procédé selon l'une quelconque des revendications précédentes, **caractérisé en ce que** la dureté des particules solides de glace est comprise entre 2 et 2,5 MOHS.

13. Procédé selon l'une quelconque des revendication précédentes, **caractérisé en ce que** la projection des particules solides de glace diminue la taille et la quantité de porosités dans la couche de peinture.

## Patentansprüche

1. Verfahren zum Verdichten eines Korrosionsschutzlacks (10a, 10b), der Metallpartikel beinhaltet und ein mechanisches Werkstück (2, 20), wie ein Werkstück eines Turbotriebwerks bedeckt, wobei das Verfahren einen Schritt zum Projizieren mindestens einer mit Metallpartikeln geladenen Lackschicht auf die Oberfläche des Werkstücks, und mindestens einen Schritt zum Projizieren von festen Eispartikeln auf das Werkstück (2, 20) umfasst, um die Lackschicht zu verdichten und elektrisch leitfähig zu machen, und dabei die physische Integrität des Korrosionsschutzlacks beizubehalten, wobei das Verfahren **dadurch gekennzeichnet ist, dass** die Farbschicht eine Dicke aufweist, die zwischen 50 µm +/- 10% umfasst ist, wobei die festen Partikel Abmessungen aufweisen, die zwischen 1 und 30 mm umfasst sind, und vorzugsweise 3 mm aufweisen, und dadurch, dass das Projizieren der festen Eispartikel die Dicke der Lackschicht um 5 bis 10 µm verringert.

2. Verfahren nach dem vorstehenden Anspruch, **dadurch gekennzeichnet, dass** die festen Partikel Kohlendioxidpartikel umfassen.

3. Verfahren nach einem der vorstehenden Ansprüche, **dadurch gekennzeichnet, dass** die festen Partikel mit einem Druck projiziert werden, der zwischen 2 und 8 bar umfasst ist.

4. Verfahren nach einem der vorstehenden Ansprüche, **dadurch gekennzeichnet, dass** die festen Partikel entlang mindestens eines Strahls (4) projiziert werden, dessen allgemeine Richtung eine Neigung in Bezug auf die Oberfläche des Werkstücks aufweist, die zwischen 30° und 90° umfasst ist.

5. Verfahren nach einem der vorstehenden Ansprüche, **dadurch gekennzeichnet, dass** der Abstand zwischen der Oberfläche des Werkstücks (2, 20) und der Düse (3) zwischen 20 und 100 mm umfasst ist.

6. Verfahren nach einem der vorstehenden Ansprüche, **dadurch gekennzeichnet, dass** die festen Partikel entlang mindestens eines Strahls (4) projiziert werden, der sich mit einer Geschwindigkeit bewegt, die zwischen 40 und 60 mm/s umfasst ist.

7. Verfahren nach einem der vorstehenden Ansprüche, **dadurch gekennzeichnet, dass** es zwei Schritte zum Projizieren der Partikel auf die Oberfläche des Werkstücks (2, 20) umfasst.

8. Verfahren nach einem der vorstehenden Ansprüche, **dadurch gekennzeichnet, dass** die Metallpartikel Aluminium umfassen.

9. Verfahren nach einem der vorstehenden Ansprüche, wobei das mechanische Werkstück eine Turbotriebwerkswelle ist.

10. Verfahren nach einem der vorstehenden Ansprüche, **dadurch gekennzeichnet, dass** die festen Eispartikel mit einem Massendurchfluss projiziert werden, der zwischen 0,8 kg/h und 2 kg/h, vorzugsweise zwischen 1 und 1,5 kg/h umfasst ist.

11. Verfahren nach einem der vorstehenden Ansprüche, **dadurch gekennzeichnet, dass** die Eispartikel gleichzeitig mit einem Luftstrom und mit einem konstanten Druck projiziert werden.

12. Verfahren nach einem der vorstehenden Ansprüche, **dadurch gekennzeichnet, dass** die Härte der festen Eispartikel zwischen 2 und 2,5 MOHS umfasst ist.

13. Verfahren nach einem der vorstehenden Ansprüche, **dadurch gekennzeichnet, dass** das Projizieren der festen Eispartikel die Größe und die Menge an Poren in der Lackschicht verringert.

## Claims

1. Method of compacting an anti-corrosive paint (10a, 10b) comprising metal particles and covering a mechanical part (2, 20) such as a turbine engine part, the method comprising a step of projecting at least one paint layer loaded with metallic particles onto the surface of the part and to at least one step of spraying solid ice particles on the part (2, 20) so as to densify and to make the paint layer electrically conductive while preserving the physical integrity of the anti-corrosion paint, **characterized in that** the paint layer has a thickness of between 50 µm +/- 10%, the solid particles have dimensions of between 1 and 30 mm, and preferably, 3mm and **in that** the projection of solid ice particles reduces the thickness of the paint layer by 5 to 10 µm.

2. Method according to the preceding claim, **characterised in that** said solid particles comprise carbon dioxide particles.

3. Method according to one of the preceding claims, **characterised in that** the solid particles are sprayed at a pressure of between 2 and 8 bars.

4. Method according to any one of the preceding claims, **characterised in that** the solid particles are sprayed according to at least one beam (4), of which the general direction has an inclination with respect to the surface of the part which is between 30° and 90°.

5. Method according to any one of the preceding claims, **characterised in that** the distance between the surface of the part (2, 20) and the nozzle (3) is between 20 and 100 mm.

6. Method according to any one of the preceding claims, **characterised in that** the solid particles are sprayed according to at least one beam (4) which is moved at a speed of between 40 and 60mm/s.

7. Method according to any one of the preceding claims, **characterised in that** it comprises two steps of spraying particles over the surface of the part (2, 20).

8. Method according to any one of the preceding claims, **characterised in that** the metal particles comprise aluminium.

9. Method according to any one of the preceding claims, wherein the mechanical part is a turbine engine shaft.

10. Method according to any one of the preceding claims, **characterised in that** the solid ice particles are sprayed with a mass flow of between 0.8kg/h and 2kg/h, preferably, between 1 and 1.5kg/h.

11. Method according to any one of the preceding claims, **characterised in that** the ice particles are projected simultaneously with an airflow and at a constant pressure.

12. Method according to any one of the preceding claims, **characterised in that** the hardness of the solid ice particles is between 2 and 2.5 Mohs.

13. Method according to any one of the preceding claims, **characterized in that** the projecting of solid ice particles reduces the size and quantity of pores in the paint layer.
